# EUROPÄISCHE PATENTSCHRIFT

(11) **EP 2 909 273 B1**
(45) Veröffentlichungstag und Bekanntmachung des Hinweises auf die Patenterteilung: **05.10.2016**
(21) Anmeldenummer: 13777240.6
(22) Anmeldetag: 11.10.2013
(51) Int. Cl.: C08L 91/06

(54) **REISKLEIEWACHSOXIDATE**
WAXY OXIDATION PRODUCTS OF RICE BRAN
PRODUITS D'OXYDATION DE CIRE DE SON DE RIZ

(30) Priorität: 20.10.2012 DE 102012021082
(43) Veröffentlichungstag der Anmeldung: 26.08.2015
(73) Patentinhaber: Clariant International Ltd, 4132 Muttenz (CH)
(72) Erfinder: HERRLICH, Timo, 77815 Buehl (DE); WOLF, Stefanie, 67551 Worms (DE); FELL, Rainer, 86368 Gersthofen (DE); HOHNER, Gerd, 86152 Augsburg (DE)
(74) Vertreter: Mikulecky, Klaus
(86) Internationale Anmeldenummer: PCT/EP2013/003062
(87) Internationale Veröffentlichungsnummer: WO 2014/060082

(56) Entgegenhaltungen:
- DE-A1- 10 231 886
- DE-B1- 2 450 342

## Beschreibung

Die Erfindung betrifft hochoxidierte Reiskleiewachsoxidate, insbesondere Reiskleiewachsoxidate mit hoher Säurezahl sowie Verfahren zu deren Herstellung. Sie betrifft ferner die Verwendung solcher Reiskleiewachsoxidate zur Herstellung von teilsynthetischen Wachsestern, teilverseiften Wachsestern sowie von verseiften Säurewachsen.

Die Oxidation von fossilen sowie von nichtfossilen Naturwachsen mit Chromschwefelsäure ist seit Anfang des 20. Jahrhunderts bekannt und wird technisch anhand von fossilen Montanwachsen seit 1927 u.a. im heute noch betriebenen "Gersthofener Verfahren" durchgeführt. Neben dem fossilen Montanwachs lassen sich mit Hilfe dieser chromsäurebasierten Verfahren auch nachwachsende Naturwachse wie z. B. Carnaubawachs, Candelillawachs etc. oxidieren. Ein Verfahren zur Chromsäureoxidation von Carnaubawachs wurde beispielsweise in DE10231886 beschrieben. Naturbelassene Carnaubawachse (fettgrau, Typ 4; mittelgelb, primagelb und flor, Typen 3 bis 1) und insbesondere Rohmontanwachs (schwarz) sind deutlich dunkel gefärbt. Die Oxidation mit Chromschwefelsäure führt zu deutlich helleren bis hin zu weißen Wachsprodukten. Ferner führt die Chromsäurebleichung genannter Naturwachse, in Abhängigkeit von der eingesetzten Chromsäuremenge im Verhältnis zum eingesetzten Wachs, zu hohen und definierten Säurezahlen (typisch: 130 bis 160 mg KOH/g). Bei der Oxidation mit Chromsäure kommt es im Wesentlichen zu einer Spaltung der Wachsester sowie einer in-situ-Oxidation der entstandenen Wachsalkohole zu Wachssäuren. Die Höhe der Säurezahl ist ein Maß für den Gehalt an freien Wachssäuren. Die typischen Umsätze solcher Oxidationen liegen dabei im Bereich von ca. 50 bis 90 % bezüglich der Estergruppen. Die auf diese Weise gebleichten Naturwachse besitzen daher zusätzlich zur gewünschten Aufhellung eine höhere Verseifungszahl und Säurezahl, die mit zusätzlichen vorteilhaften Verarbeitungseigenschaften verbunden sind. Die gewonnenen Säurewachse eignen sich hervorragend, um daraus z. B. durch Veresterung mit mono- oder polyvalenten Alkoholen wie beispielsweise Methylalkohol, Ethylalkohol, Ethylenglykol, Butylenglykol oder Glycerin oder durch Verseifung oder durch Teilveresterung in Kombination mit einer Teilverseifung definierte Folgeprodukte mit konstanter Produktqualität herzustellen. Durch derartige Modifizierungsprozesse ist ausgehend von natürlich vorkommenden Wachsrohstoffen eine Vielfalt von sogenannten teilsynthetischen Wachsen zugänglich, die den jeweiligen anwendungstechnischen Erfordernissen gezielt in optimaler Weise angepasst werden können. Das Anpassungspotential durch Veresterung, Verseifung etc. ist dabei naturgemäß umso größer, je höher der Gehalt an freien Säuren im primären Oxidationsprodukt eingestellt wird. Entsprechende Herstellprozesse sind etwa in Ullmann's Encyclopedia of Industrial Chemistry, 2000 Waxes sowie in Vladimir Vcelák, Chemie und Technologie des Montanwachses, 1959, Teil B: Veredelung des Montanwachses, Seite 458ff beschrieben.

Die Chromsäureoxidation von Reiskleiewachs (im Folgenden: Reiswachs) verläuft anders als im Falle der vorgenannten Naturwachse auch bei stöchiometrischem bis überstöchiometrischem Chromsäureangebot mit nur niedrigen Umsätzen der Estergruppen. Es kommt im Wesentlichen lediglich zu einer Aufhellung des Reiswachses.

In der Patentanmeldung JP-36005526 wird die Herstellung von lösemittelhaltigen Politurmassen beschrieben, in denen ein chemisch modifiziertes Wachs auf der Grundlage von Reiswachs enthalten ist. Die Modifizierung erfolgt durch Oxidation von rohem Reiswachs mit Chromtrioxid oder Chromsäuresalzen in Gegenwart von Schwefelsäure und gegebenenfalls nachfolgender Veresterung und/oder Verseifung der dabei gebildeten Säuregruppen. Es werden dabei jedoch lediglich Säurezahlen bis maximal 45 mg KOH/g erreicht.

Chemisch modifizierte Reiswachse mit Säurezahlen oberhalb von 50 mg KOH/g konnten z. B. durch Oxidation mit Chromschwefelsäure bisher nicht hergestellt werden.

Reiswachs fällt bei der Verarbeitung von Rohreis (oryza sativa) als Nebenprodukt an. Nachdem beim Dreschen der reifen Reispflanzen die an den Körnern haftenden Deckspelzen entfernt und weitere Spelzenbestandteile neben anderen Verunreinigungen in der Reismühle separiert wurden, enthalten die Reiskörner noch den Keimling und sind von der sog. Silberhaut umschlossen. Keimling und Silberhaut werden in einem weiteren Verarbeitungsschritt durch Abschleifen entfernt und liefern neben dem geschliffenen Reis die Reiskleie. Diese enthält Lipidanteile, die zum überwiegenden Teil aus fetten Ölen und zu einem geringeren Prozentsatz aus wachsartigen Komponenten bestehen. Letztere finden sich in dem aus der Kleie durch Pressung oder Lösemittelextraktion gewonnenen Öl, aus dem sie aufgrund ihrer Schwerlöslichkeit bei niedrigen Temperaturen z. B. durch Ausfrieren isoliert werden. Die berechnete potentielle Verfügbarkeit von Reiswachs liegt nach Journal of Scientific & Industrial Research, 2005, Vol. 64, 866 - 882, würde man die gesamte Weltreisproduktion dazu nutzen um neben Reisöl ebenfalls das Reiswachs zu gewinnen, bei ca. 300.000 Tonnen pro Jahr.

Reiswachs gehört nach Ullmann's Encyclopedia of Industrial Chemistry, 5th ed. 1996, Vol. A28, Seite 117 zu einer Gruppe von Wachsen, denen bisher nur lokale Bedeutung oder lediglich akademisches Interesse beigemessen wurde. Beschrieben wurde die Verwendung von Reiswachs in der Kosmetik (EP-B1-1343454; siehe auch Bräutigam, Lexikon der kosmetischen Rohstoffe, Norderstedt 2010, Seite 77), als Verarbeitungshilfsmittel in Kunststoffen (JP-10007862; JP-60011553; JP-49090739; JP-60011553) sowie in Druckfarben und elektrophotographischen Tonern (JP-2010020304).

Die chemische Zusammensetzung von Reiswachs ist trotz zahlreicher analytischer Untersuchungen mit nicht übereinstimmenden Befunden offenbar nicht völlig geklärt. Sicher hingegen ist die Zusammensetzung des Wachskörpers aus Wachsestern. Die Reiskleiewachsester bestehen hauptsächlich aus Monoestern langkettiger gesättigter unverzweigter Fettsäuren mit langkettigen unverzweigten aliphatischen Alkoholen. Vorherrschend sind im Säureanteil Behen- und Lignocerinsäure mit den Kettenlängen C₂₂ und C₂₄ und im Alkoholanteil die Kettenlängen C₂₆, C₂₈, C₃₀, C₃₂ und C₃₄. Daneben kann das Wachs freie Fettsäuren sowie Squalen, Phosphorlipide und Sterylester enthalten. Der Gehalt an Wachsestern in raffiniertem und entöltem Reiskleiewachs liegt in der Regel größer als 96 Gew.-%. In nicht entöltem Reiskleiewachs kann der Gehalt an Wachsestern, je nach Gehalt des Reiskleieöls, auch bei nur 50 Gew.-% liegen. Weitere als Mindermengenbestandteile anzusehende variable Bestandteile des Reiskleiewachses sind die nicht näher spezifizierten "Dunkelstoffe", Squalen sowie der sogenannte "Gum"-Anteil. Diese führen meist zu einer in Farbe und Anwendbarkeit schwankenden und schwer zu reproduzierenden Produktqualität. Als derzeitiger Stand der Technik zur Aufhellung der braunen Reiskleiewachse gilt die klassische Bleichung mit Wasserstoffperoxid. Wasserstoffperoxid-gebleichte Reiskleiewachse sind gelblich und entsprechen in ihrem Estergehalt und in ihrer Säurezahl weitgehend den Ausgangswachsen. Solche Typen werden überwiegend als entölte und raffinierte Reiskleiewachse am Markt angeboten, zeigen jedoch, da die Mindermengenbestandteile im Produkt verbleiben, ebenfalls schwankende Produktqualität.

Es besteht ein anhaltendes Bedürfnis nach gut verfügbaren und nachhaltigen Produkten mit einer hohen und insbesondere konstanten Produktqualität. Das Reiskleiewachs als Nebenstrom der Reis- bzw. Reisölgewinnung tritt nicht als Konkurrenzprodukt zur Lebensmittelgewinnung auf und stellt wegen der höheren Wertschöpfung damit einen besonders nachhaltigen nachwachsenden Rohstoff dar. Durch ein verbessertes Oxidationsverfahren mit Chromschwefelsäure und damit verbunden hohen Säurezahlen gefolgt von einer weiteren chemischen Umsetzung (Veresterung, Verseifung, etc.) kann eine zuverlässige Produktqualität ohne die bei Naturwachsen üblichen Eigenschaftsschwankungen erzielt werden.

Die Aufgabe der Erfindung besteht daher darin, Reiswachsoxidate mit definierten Eigenschaften und konstant hohen Säurezahlen als Rohstoff für chemische Derivatisierungen bereitzustellen. Dadurch wird die Möglichkeit geschaffen, den technischen Bedürfnissen unterschiedlichster Anwendungsbereiche in optimal angepasster Weise zu genügen.

Entgegen dem bisherigen Stand der Technik wurde nun überraschend gefunden, dass eine Oxidation des Reiswachses mit Chromschwefelsäure dann zu hohen Säurezahlen führt, wenn die Oxidation in Gegenwart eines geeigneten Oxidationspromotors (z. B. Emulgator, Tensid etc.) oder unter starkem mechanischem Dispergieren erfolgt.

Gegenstand der Erfindung sind Reiskleiewachsoxidate mit einer Säurezahl gemessen nach DIN ISO 2114 größer 70 mg KOH/g, bevorzugt größer 100 mg KOH/g, besonders bevorzugt größer 140 mg KOH/g.

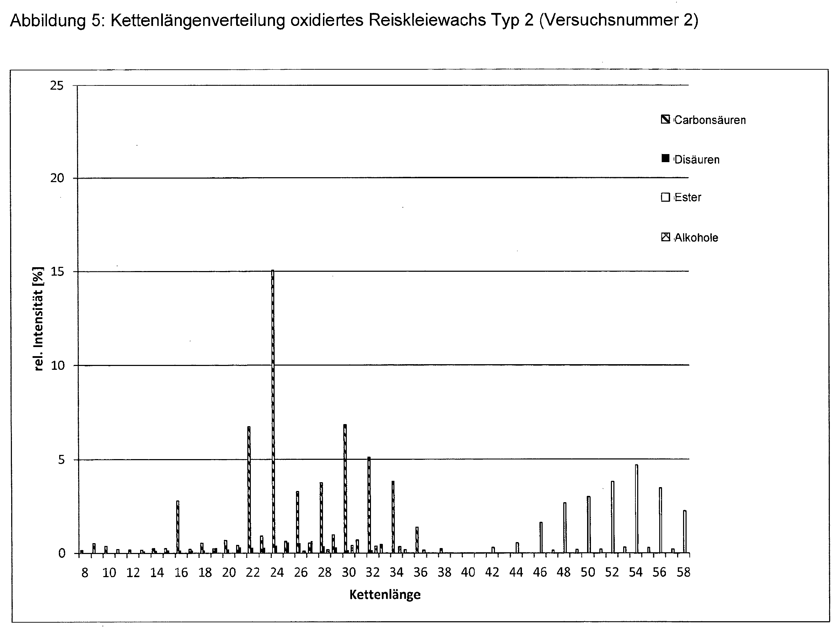

Die erfindungsgemäßen Reiskleiewachsoxidate umfassen freie aliphatische Carbonsäuren C₁₆ bis C₃₆ mit einer für Reiskleiewachsoxidate charakteristischen Kettenlängenverteilung (siehe Abbildung 5). Diese zeichnet sich aus durch eine ausgeprägte Majorität von Lignocerinsäure (C₂₄) und deutlichen Anteilen an Behensäure (C₂₂) und Melissinsäure (C₃₀) in charakteristischen Verhältnissen. Bevorzugt liegt die darin am häufigsten vorkommende freie Carbonsäure, Lignocerinsäure (C₂₄-Säure) zu mindestens 10 Gew.-%, bevorzugt zu mindestens 15 Gew.-%, besonders bevorzugt zu mindestens 20 Gew.-% vor. Erfindungsgemäß liegt das charakteristische Gewichtsverhältnis von Behensäure zu Lignocerinsäure C₂₂:C₂₄ für die Reiskleiewachsoxidate bei 1.0:2.0 bis 1.0:2.8, bevorzugt bei 1.0:2.1 bis 1.0:2.4. Das charakteristische Gewichtsverhältnis von Behensäure zu Melissinsäure C₂₂:C₃₀ liegt bei den erfindungsgemäßen Reiskleiewachsoxidaten zwischen 1.0:0.8 bis 1:1.2, bevorzugt zwischen 1.0:0.8 bis 1.0:1.05. Die Kettenlängenverteilung sowie die charakteristischen Gewichtsverhältnisse wurden mittels GC bestimmt.

In Abhängigkeit vom Umsetzungsgrad der Ester enthalten die erfindungsgemäßen Reiskleiewachsoxidate genuine Ester (C₄₆-C₆₂) in Mengen kleiner 65 Gew.-%, bevorzugt kleiner 50 Gew.-%, besonders bevorzugt kleiner 40 Gew.-%. Unter "genuinen Estern" werden hier von der Umsetzung nicht erfasste Restanteile der ursprünglich im Rohwachs enthaltenen Wachsester verstanden. Ferner enthalten die erfindungsgemäßen Reiskleiewachsoxidate kleine Mengen an aliphatischen α,ω-Dicarbonsäuren (C₁₀ bis C₃₂), in Abhängigkeit vom Umsetzungsgrad von 5 bis 15 Gew.-%. Daneben können die erfindungsgemäßen Reiskleiewachsoxidate auch kleine Mengen aliphatischer Alkanole (C₂₄ bis C₃₆) enthalten.

Weitere nicht näher spezifizierte Bestandteile (z. B. Phosphorlipide, Sterolderivate, Sterolester, Oryzanole, Tocotrienole, Glycolipide, Squalen etc.) aus dem rohen oder raffinierten Reiskleiewachsrohstoff sowie die daraus entstandenen Oxidate können in Mindermengenkonzentrationen bis zu 12 Gew.-% auftreten.

In Abhängigkeit von der prozessbedingt im rohen oder raffinierten Reiswachsrohstoff enthaltenen Menge an fetten Ölen (Reiskleieöl), liegen auch Anteile an kurzen freien Fettsäuren (C₈ bis C₂₀) vor. Bevorzugt umfassen die erfindungsgemäßen Reiskleiewachsoxidate daher auch den ölstämmigen Anteil an freien Fettsäuren (C₈ bis C₂₀) bis zu maximal 50 Gew.%, bevorzugt bis zu maximal 30 Gew.%, besonders bevorzugt bis zu maximal 5 Gew.%.

Erfindungsgemäß enthalten die Reiskleiewachsoxidate mindestens zu 85 Gew.-%
a) 40 bis 97 Gew.-% freie aliphatische Carbonsäuren C₈-C₃₆ (wachs- ,öl- und/oder fettstämmig),
b) 0 bis 50 Gew.-% freie aliphatische Alkohole C₂₄-C₃₆ (wachsstämmig),
c) 3 bis 15 Gew.-% freie aliphatische Disäuren C₁₀-C₃₀ (wachsstämmig),
d) 0 bis 65 Gew.-% genuinen Estern C₄₄-C₆₂ (wachsstämmig),
e) 0 bis 12 Gew.-% weitere im Reiswachs vorhandene natürliche Bestandteile.

Erfindungsgemäß enthalten die Reiskleiewachsoxidate mindestens zu 85 Gew.-%
a) 60 bis 97 Gew.-% freie aliphatische Carbonsäuren C₈-C₃₆ (wachs- und öl- und/oder fettstämmig),
b) 0 bis 20 Gew.-% freie aliphatische Alkohole C₂₄-C₃₆ (wachsstämmig),
c) 5 bis 15 Gew.-% freie aliphatische Disäuren C₁₀-C₃₀ (wachsstämmig),
d) 0 bis 50 Gew.-% genuinen Estern C₄₄-C₆₂ (wachsstämmig),
e) 0 bis 12 Gew.-% weitere im Reiswachs vorhandene natürliche Bestandteile.

Erfindungsgemäß besonders bevorzugt enthalten die Reiskleiewachsoxidate mindestens zu 85 Gew.-%
a) 70 bis 97 Gew.-% freie aliphatische Carbonsäuren C₈-C₃₆ (wachs- und öl- und/oder fettstämmig),
b) 0 bis 5 Gew.-% freie aliphatische Alkohole C₂₄-C₃₆ (wachsstämmig),
c) 5 bis 12 Gew.-% freie aliphatische Disäuren C₁₀-C₃₀ (wachsstämmig),
d) 0 bis 40 Gew.-% genuinen Estern C₄₄-C₆₂ (wachsstämmig),
e) 0 bis 12 Gew.-% weitere im Reiswachs vorhandene natürliche Bestandteile.

Die erfindungsgemäßen Reiskleiewachsoxidate zeichnen sich durch einen Tropfpunkt gemessen nach DIN ISO 2176 zwischen 70 °C und 90 °C, bevorzugt zwischen 75 °C und 85 °C aus.

Bevorzugt zeichnen sich die erfindungsgemäßen Reiskleiewachsoxidate im Vergleich zu herkömmlichen Oxidaten (z. B. Montanwachsbasis) durch eine besonders helle bis weiße Farbe aus. Die Farbe lässt sich anhand der lodfarbzahl gemessen nach DIN 6162 quantifizieren und liegt bei den erfindungsgemäßen Reiskleiewachsoxidaten bei kleiner 20, bevorzugt kleiner 10, besonders bevorzugt kleiner 5.

Erfindungsgemäß erhöht sich durch die Oxidation des Reiskleiewachsrohstoffs die Verseifungszahl gemessen nach DIN ISO 3681 um mindestens 50 %, bevorzugt um mindestens 80 %, besonders bevorzugt um mindestens 150 %. Die Erhöhung der Verseifungszahl kann mechanistisch durch die Spaltung der Wachsester und die anschließende Oxidation der Wachsalkohole zu Säuren erklärt werden. Zusätzlich wird ein Teil ungesättigter Kohlenstoff-Kohlenstoffbindungen durch die Chromsäure gespalten und ebenfalls zu Säuren aufoxidiert. Damit ist die Verseifungszahl auch eine Maßzahl für die tatsächlich stattgefundene Oxidation in Abgrenzung zur Verseifung, bei der sich die Verseifungszahl bekanntlich nicht ändert, und in Abgrenzung zu anderen Bleichverfahren bei denen es lediglich zu einer Aufhellung des Produkts kommt. Beispielsweise bewirkt die Bleichung von Reiskleiewachs mit Wasserstoffperoxid keine chemische Modifikation des Wachses im Sinne der Erfindung, da hier lediglich verfärbende Verunreinigungen und Nebenbestandteile beseitigt werden, ohne dass die eigentliche Wachsstruktur verändert wird.

Die erfindungsgemäßen Reiskleiewachsoxidate werden einstufig durch Oxidation mit Chromschwefelsäure unter gleichzeitiger Zugabe eines Oxidationspromotors durchgeführt. Der Oxidationspromotor wird zu maximal 10 Gew.-%, bezogen auf das eingesetzte Ausgangswachs, bevorzugt zu maximal 5 Gew.-%, besonders bevorzugt zu maximal 1 Gew.-% eingesetzt. Unter Oxidationspromotoren werden hier Stoffe verstanden, welche durch ihre chemische Natur die Oxidation durch Phasenvermittlung, Esteraktivierung oder durch Katalyse in Gang setzen bzw. diese beschleunigen. Als Oxidationspromotoren werden beispielsweise säurestabile und, zur besseren Abtrennbarkeit, wasserlösliche Emulgatoren (wie z. B. Alkansulfonate, perfluorierte Alkansulfonsäuren, Nonafluoro-1-butansulfonsäure, etc.), Tenside, polymere Tenside, stickstoffhaltige Kationtenside, Phasentransferkatalysatoren, Fenton Reagenzien (z. B. FeSO₄ + H₂O₂) sowie auch Metallsalze (wie z. B. AlCl₃, FeCl₃, CuCl₂, CoCl₂) oder Salzsäure eingesetzt. Weitere für diese Ausführungsform zur Herstellung von Reiskleiewachsoxidaten geeignete Emulsionsvermittler können etwa in Ullmann's Encyclopedia of Industrial Chemistry, 2000, Emulsions gefunden werden. Unterstützend kann die Grenzfläche der Reaktion bei dieser Ausführungsform durch starkes mechanisches Dispergieren erhöht werden. Im Grenzfall einer ausreichend hohen mechanischen Dispergierwirkung, kann ggf. auf einen Oxidationspromotor verzichtet werden. Bevorzugt wird daher zur Herstellung der erfindungsgemäßen Reiskleiewachsoxidate die Oxidation mit Chromschwefelsäure unter starker mechanischer Dispergierung (z. B. Ultraschall, Dissolverscheibe bei sehr hoher Drehzahl, etc.).

Mit den beiden genannten Ausführungsformen lässt sich Reiskleiewachs auf Säurezahlen von mindestens 70 mg KOH/g, bevorzugt mindestens 100 mg KOH/g, besonders bevorzugt mindestens 140 mg KOH/g oxidieren. Ebenso gelingt dies im Übrigen auch mit anderen schlecht oxidierbaren Naturwachsen, wie z. B. Sonnenblumenwachs etc.

Erfindungsgemäß können in untergeordneten Mengen bis zu maximal 20 Gew.-% weitere mit Chromsäure oxidierbare Substanzen (wie z. B andere Wachse wie beispielsweise Montanwachs, Carnaubawachs oder Sonnenblumenwachs, ferner Ester, Diester, organische Säuren wie beispielsweise Stearinsäure und Behensäure, Fettalkohole oder Aldehyde) eingesetzt werden.

Bevorzugt werden die erfindungsgemäßen Reiskleiewachsoxidate nach erfolgter Chromsäureoxidation unabhängig von der Herstellungsvariante ggf. durch Waschen oder Zentrifugieren von Chromsalzen befreit. Bevorzugt genügt die Reinheit der erfindungsgemäßen Reiskleiewachsoxidate dem Deutschen Arzneibuch für Cera montanglycoli.

Als Reiswachsausgangsstoff zur Herstellung von Reiskleiewachsoxidaten im erfindungsgemäßen Sinne können aus Reiskleie durch beliebige Trennverfahren gewonnene wachsartige Bestandteile eingesetzt werden. Bevorzugt sind dabei die aus Reiskleieöl in bekannter Weise, z. B. durch Ausfrieren oder Extrahieren, isolierten Wachsanteile. Diese können als solche und/oder nach mechanischer bzw. physikalischer Reinigung und/oder nach Bleichung mittels Wasserstoffperoxid verwendet werden. Bevorzugt werden die erfindungsgemäßen Reiskleiewachsoxidate durch Chromsäureoxidation nach oben beschriebenen Verfahren wahlweise aus rohem, nicht raffiniertem oder raffiniertem Reiskleiewachs hergestellt. Erfindungsgemäß enthält das Reiskleiewachs Spuren bis deutliche Mengen an Reiskleieöl von maximal 50 Gew.-%, bevorzugt maximal 30 Gew.-%, besonders bevorzugt maximal 5 Gew.-%.

Weiterer Gegenstand der Erfindung ist die Verwendung der erfindungsgemäßen Reiskleiewachsoxidate zur Herstellung von synthetischen Esterwachsen durch Veresterung mit mono- oder polyvalenten Alkoholen (wie z. B. Methylalkohol, Ethylalkohol, Ethylenglykol, Butylenglykol, Glycerin, Diglycerin, Trimethylolpropan, Pentaerythrit, Sorbitol, etc.). Typische Herstellvorschriften sind etwa in Vladimir Vcelák, Chemie und Technologie des Montanwachses, 1959, Teil B: Veredelung des Montanwachses, Seiten 510 - 516 beispielhaft für einschlägig bekannte Montanwachsester vom Typ E, Typ O und vom Typ KPS sowie in DE-2432215 dargestellt. Wahlweise können den Reiskleiewachsoxidaten vor bzw. während der Veresterung weitere aliphatische oder aromatische Mono- und/oder Dicarbonsäuren zugesetzt werden. Bevorzugt zeichnen sich die Veresterungsprodukte neben der nachwachsenden Rohstoffbasis durch eine besonders helle Farbe, gemessen als lodfarbzahl nach DIN 6162 von kleiner 10, besonders bevorzugt kleiner 5 aus.

Weiterer Gegenstand der Erfindung ist die Verwendung der erfindungsgemäßen Reiskleiewachsoxidate zur Herstellung von vollverseiften Reiskleiewachsderivaten durch nahezu äquimolare Verseifung mit basischen Metallhydroxiden (z. B. NaOH (s), KOH (s), Ca(OH)₂ und Zn(OH)₂ (s), etc.), Metalloxiden (z. B. CaO, etc.), Metallcarbonaten (Na₂CO₃, CaCO₃) oder mit wässrigen Laugen (wie z. B. NaOH (aq.), KOH (aq.), etc.). Entsprechende Herstellvorschriften finden sich beispielhaft etwa in DE-4019167. Bevorzugt zeichnen sich die Veresterungsprodukte neben der nachwachsenden Rohstoffbasis durch eine besonders hellere Farbe im Vergleich zu den analogen Montanwachsseifen, gemessen als lodfarbzahl nach DIN 6162 von kleiner 20, besonders bevorzugt kleiner 10 aus.

Weiterer Gegenstand der Erfindung ist die Verwendung der erfindungsgemäßen Reiskleiewachsoxidate zur Herstellung von teilverseiften Reiskleieestern durch Teilveresterung mit polyvalenten Alkoholen (wie z. B. Ethylenglykol, Butylenglykol, Glycerin, Diglycerin, Trimethylolpropan, Pentaerythrit, Sorbitol, etc.) und anschließender Verseifung der freien Säuren mit basischen Metallhydroxiden (z. B. NaOH(s), KOH (s), Ca(OH)₂ und Zn(OH)₂ (s), etc.), Metalloxiden (z. B. CaO, etc.), Metallcarbonaten (Na₂CO₃, CaCO₃) oder mit wässrigen Laugen (wie z. B. NaOH (aq.), KOH (aq.), etc.). Entsprechende Herstellvorschriften finden sich beispielhaft etwa in EP-1010728B1. Wahlweise können den Reiskleiewachsoxidaten vor bzw. während der Teilveresterung weitere aliphatische oder aromatische Mono- und/oder Dicarbonsäuren zugesetzt werden. Bevorzugt zeichnen sich die teilverseiften Veresterungsprodukte neben der nachwachsenden Rohstoffbasis durch eine besonders helle Farbe, gemessen als lodfarbzahl nach DIN 6162 von kleiner 10, besonders bevorzugt kleiner 5 aus.

Sowohl die erfindungsgemäßen Reiskleiewachsoxidate als auch die daraus wie beschrieben durch Veresterung, Verseifung, Teilverseifung etc. hergestellten Derivate können technisch in vielfacher Weise verwendet werden, z. B. als Additive in der Kunststoffverarbeitung (innere und äußere Gleitmittel, Trennmittel, Entformungshilfsmittel, Dispergierhilfsmittel für Pigmente), als Bestandteil von Pflegemitteln (Pasten, Polituren, Emulsionen) oder kosmetischen Zubereitungen, als Additive für Druckfarben, z. B. zur Scheuerschutzverbesserung, als Zusatz für Lacke zur Mattierung oder Verbesserung der Kratzfestigkeit.

### Beispiele:

Im Folgenden werden beispielhaft die Herstellung von Reiskleiewachsoxidaten sowie Reiskleiewachsderivaten beschrieben. Das Verfahren erfolgt durch Oxidation der Reiskleiewachse mit Chromschwefelsäure unter Zuhilfenahme eines geeigneten Oxidationspromotors beziehungsweise bei heftiger mechanischer Dispergierung.

Die Reiskleiewachsderivate werden aus den entsprechenden Reiskleiewachsoxidaten hergestellt.

### Substanzcharakterisierung:

Die im Folgenden in Tabelle 1 aufgeführten Standardmethoden, die allgemein zur Charakterisierung von Fetten und Wachsen angewandt werden, dienen zur Bestimmung der Kennzahlen von Reiskleiewachs und Reiskleiewachsderivaten.

**Tabelle1:**

| | | Methode |
|---|---|---|
| Säurezahl | [mg KOH/g] | ISO 2114 |
| Verseifungszahl | [mg KOH/g] | ISO 3681 |
| Tropfpunkt | [°C] | ISO 2176 |
| DSC-Schmelzpunkt | [°C] | DIN EN ISO 11357-1 |
| Schmelzenthalpie über DSC | [J/g] | DIN EN ISO 11357-1 |
| Ölgehalt | | AOCS Ja 4-46 |
| Massenverlust überTGA | [wt.%, 300°/+30min] | DIN EN ISO 11358 |
| lodfarbzahl | | DIN 6162 |

### Kettenlängenverteilungen:

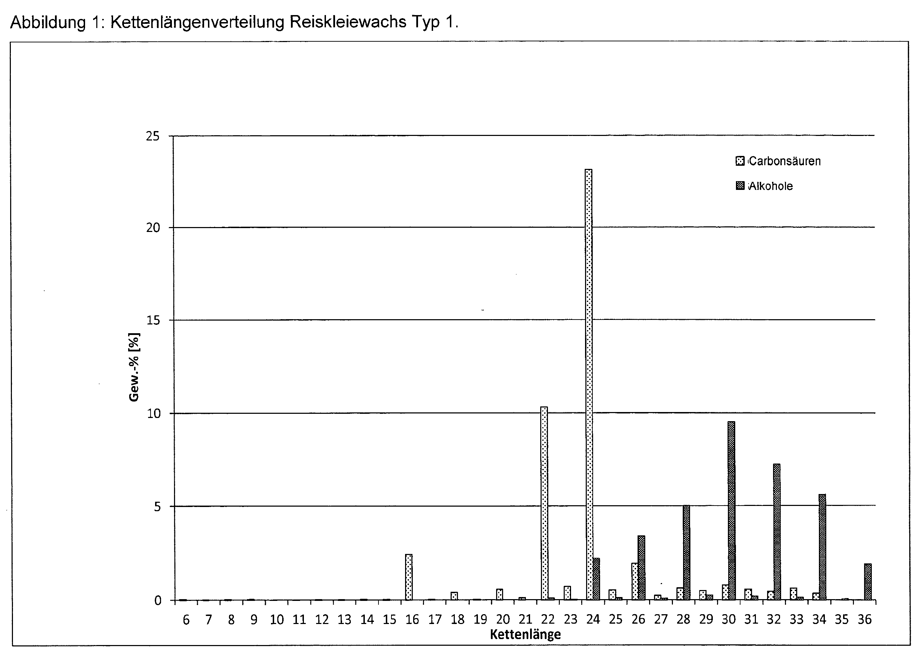

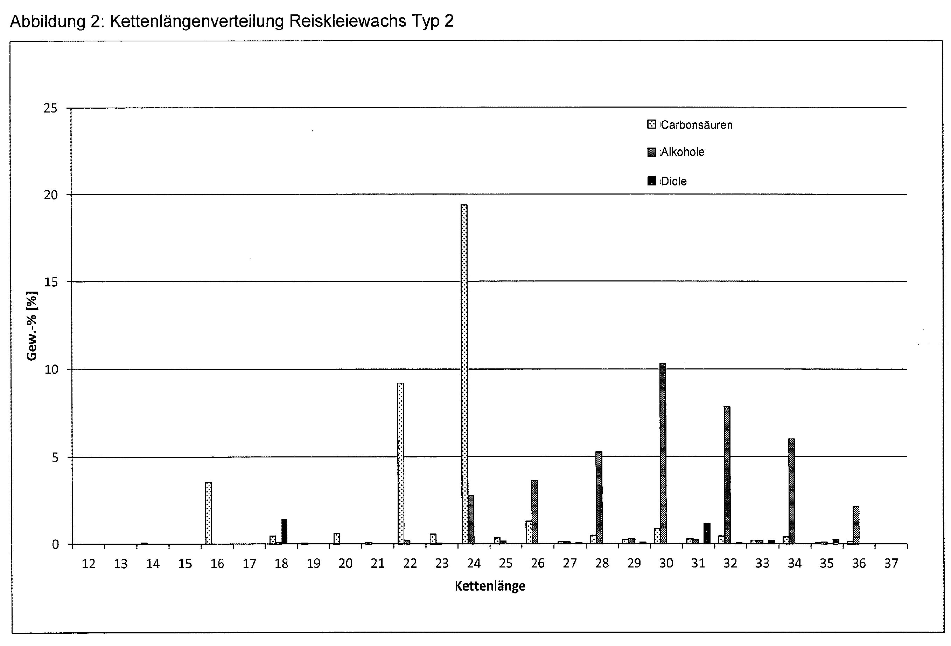

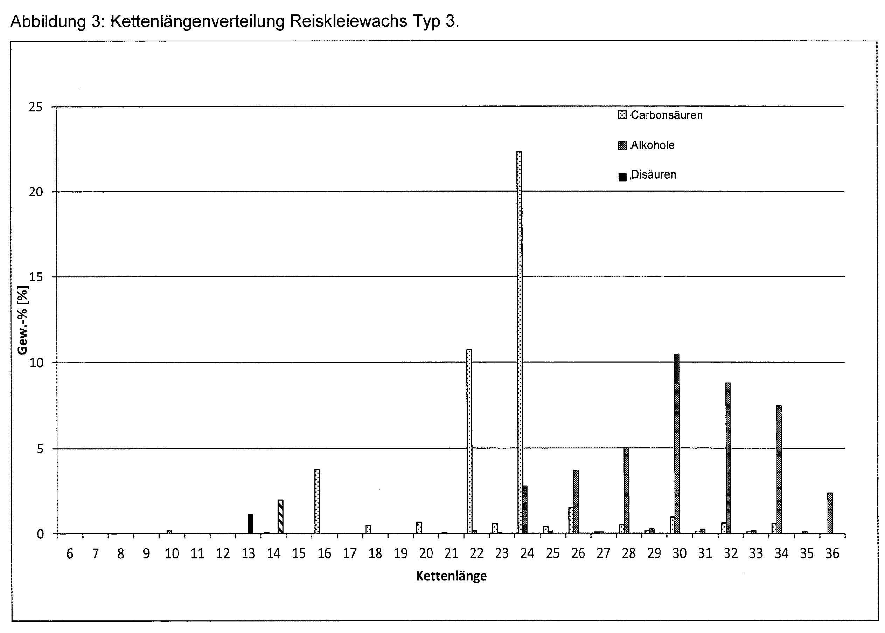

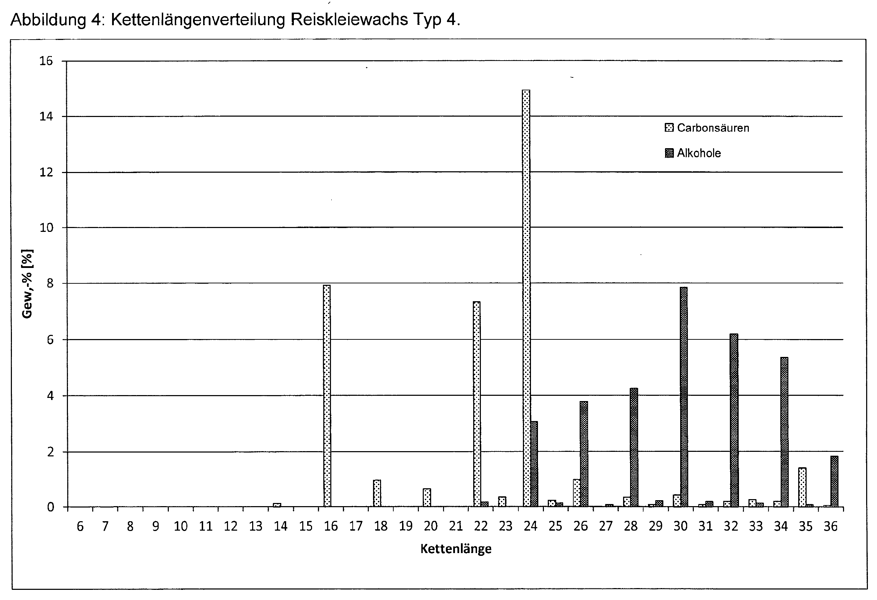

Die Kettenlängenverteilungen der rohen Reiskleiewachse (Abbildung 1-4) wurden durch GF/UV-Trennungen ermittelt. Dazu wurden die Reiskleiewachse zunächst unter definierten Bedingungen verseift, der UV-Anteil (Unverseifbares) extrahiert, der GF-Anteil (Gesamtfettsäuren) salzfrei gewaschen und beide Anteile separat per Gaschromatographie untersucht.

Als Vergleichssubstanzen dienten Wachssäuren und Wachsalkohole mit Kohlenstoffkettenlängen zwischen C₆ und C₃₆. Wachsester mit C₄₄ bis C₅₈ wurden durch Kombination der Modellsubstanzen dargestellt.

Um die Peaks der GCs der Reiskleiewachse zu identifizieren wurde zu einer Wachsprobe jeweils eine definierte Menge der einzelnen Komponenten zugegeben und eine deutliche Zunahme der Fläche des entsprechenden Peaks beobachtet.

Die Kettenlängenverteilungen der oxidierten Reiskleiewachse wurden ebenfalls mittels Gaschromatographie bestimmt. Eine vorhergehende Verseifung ist in diesem Fall nicht notwendig, da ein Großteil der Ester bereits durch die Umsetzung mit Chromschwefelsäure in gespaltener Form vorliegen.

Tabelle 2 zeigt die Bedingungen unter denen die Gaschromatogramme der Reiskleiewachse und Reiskleiewachsderivate erstellt wurden.

**Tabelle 2: GC Bedingungen.**

| Säule | Agilent Technologies HP-1 (DB-1) Length 15 m I.D. 0,25 mm Film 0,10 µm |
|---|---|
| Detektor | 310 °C FID |
| Injektor | 300 °C Split 1:100 |
| Trägergas | Helium |
| Lösungsmittel | Toluol |
| Konzentration | 30 mg/ml |
| Injektionsmenge | 1 µl |
| Temperaturprogramm | 40 bis 320 °C; 5 K/min; 50 min bei 320 °C halten |

Folgende Wachse dienten als Rohstoffe für die Reiskleiewachsoxidate und Reiskleiewachsderivate (Reiswachs Typ1 - 4) beziehungsweise als Vergleichssubstanzen.

**Tabelle 3: Verwendete Rohstoffe und Vergleichssubstanzen**

| Rohstoff | Säurezahl | Verseifungszahl | Esterzahl | Tropfpunkt | Schmelzpunkt (DSC) | Schmelzenthalpie (DSC) | Ölgehalt | TGA (Massenverlust) | lodfarbzahl |
|---|---|---|---|---|---|---|---|---|---|
| | [mg KOH/g] | [mg KOH/g] | [mg KOH/g] | [°C] | [°C] | [J/g] | [%] | [wt.%, 300°C/+30min] | |
| Reiswachs Typ 1 (refined, deoiled) | 6,3 | 81,4 | 75,1 | 78 | 80 | -206 | 1,2 | 4,2 / 14,6 | 13.5 |
| Reiswachs Typ 2 (refined, deoiled) | 8,1 | 88,2 | 80,1 | 78 | 79 | -183 | 5 | 5,9 / 20,7 | 14 |
| Reiswachs Typ 3 (crude, deoiled) | 1,3 | n.b. | n.b. | n.b. | 79 | -192 | 1,5 | 1,2/6,4 | >120 |
| Reiswachs Typ 4 (crude) | 1,2 | 110 | 108,8 | 77 | n.b. | n.b. | 31 | 2,7/12,6 | >120 |
| Entharztes Rohmontanwachs | 28,0 | 80,9 | 52,9 | 86 | n.b. | n.b. | - | n.b. | |
| Mit Chromsäure hergestelltes Oxidat aus entharztem Rohmontanwachs | 135 | 163 | 28 | 84 | n.b. | n.b. | - | n.b. | |

| | | | | | | | | | |
|---|---|---|---|---|---|---|---|---|---|
| n.b. = nicht bestimmt | | | | | | | | | |

### Beispiel 1: Oxidation von Reiskleiewachs unter heftigem Rühren

### Ansatz:

| | |
|---|---|
| Reiskleiewachs (Typ 4) | 60 g |
| Chromschwefelsäure (100 g CrO₃/L | 1060 ml |

### Durchführung:

In einem 2 l Reaktionsgefäß mit Rührer, Temperaturfühler, Tropftrichter und Rückflusskühler wird Chromschwefelsäure vorgelegt und auf 70 °C erwärmt. Anschließend wird geschmolzenes Reiskleiewachs portionsweise zugegeben. Die Temperatur des Reaktionsgemisches wird auf 110 °C eingestellt und 10 h mit 2000 U/min mit einer Dissolverscheibe gerührt. Das Heizen sowie Rühren wird eingestellt. Sobald sich die Phasen getrennt haben wird die wässrige Phase abgetrennt.
Die organische Phase wird mit einer wässrigen Lösung von Oxalsäure und Schwefelsäure sowie Wasser chromfrei gewaschen, in warme Zentrifugengläser abgelassen und zentrifugiert.

### Beispiel 2: Oxidation von Reiskleiewachs unter Einsatz von Oxidationspromotoren:

### Ansatz:

| | |
|---|---|
| Reiskleiewachs | 500 g |
| Chromschwefelsäure (100 g CrO₃/L | 4960 ml |
| Oxidationspromotor | 1 Gew.-% bezogen auf Reiskleiewachs |

### Durchführung:

In einem 5 l Reaktionsgefäß mit Rührer, Temperaturfühler, Tropftrichter und Rückflusskühler wird Chromschwefelsäure vorgelegt und auf 70°C erwärmt. Das Reiskleiewachs wird geschmolzen, mit dem entsprechenden Oxidationspromotor vermischt und portionsweise zur Chromsäure zugegeben. Das Reaktionsgemisch wird bei 110 °C für 12 h gerührt. Das Heizen sowie Rühren wird eingestellt. Sobald sich die Phasen getrennt haben wird die wässrige Phase abgetrennt.
Die organische Phase wird mit einer wässrigen Lösung von Oxalsäure und Schwefelsäure sowie Wasser chromfrei gewaschen, in warme Zentrifugengläser abgelassen und zentrifugiert.

**Tabelle 4: Eingesetzte Oxidationspromotoren**

| | Bezeichnung | Summenformel |
|---|---|---|
| Oxidationspromotor Typ 1 | Nonafluoro-1-Butansulfonsäure | C₄HF₉SO₃ |
| Oxidationspromotor Typ 2 | Heptadecafluoro-1-Octansäure | C₈HF₁₇SO₃ |
| Oxidationspromotor Typ 3 | Aluminiumtrichlorid | AlCl₃ |
| Oxidationspromotor Typ 4 | Salzsäure, 35%ig | HCl |

Aus Tabelle 5 ist ersichtlich, dass eine 1-stufige Synthese von Reiskleiewachsoxidaten mit Säurezahlen größer 100 mgKOH/g unter Zuhilfenahme eines geeigneten Oxidationspromotors realisiert werden kann. Des Weiteren wird der Umsatz der Ester durch heftiges Rühren mit einer Dissolverscheibe erhöht.

**Tabelle 5: Oxidation von Reiskleiewachs**

| Versuchsnummer | | 1 (erf.g.) | 2 (erf.g.) | 3 (erf.g.) | 4 (erf.g.) | 5 (erf.g.).) | 6 (erf.g.) | 7 (Vergl. ) | 8 (Vergl.) |
|---|---|---|---|---|---|---|---|---|---|
| Reiswachs Typ 1 | [g] | | | | 500 | | | | |
| Reiswachs Typ 2 | [g] | 60 | 500 | | | 500 | | | |
| Reiswachs Typ 3 | [g] | | | | | | 500 | | 500 |
| Reiswachs Typ 4 | [g] | | | 500 | | | | | |
| Entharztes Rohmontanwachs | [g] | | | | | | | 155 | |
| Zusätze | | | | | | | | | |
| Chromschwefelsäure (100g CrO₃/l) | [ml] | 1060 | 4960 | 4960 | 4960 | 4960 | 4960 | 2480 | 4960 |
| Oxidationspromoto Typ 1 | [g] | | 5 | 5 | | | | | |
| Oxidations-promotor Typ 2 | [g] | | | | 5 | | | | |
| Oxidations-promotor Typ 3 | [g] | | | | | 5 | | | |
| Oxidations-promotor Typ 4 | [g] | | | | | | 14,3 | | |
| Bedingungen | | | | | | | | | |
| Reaktionsdauer | [h] | 12 | 12 | 12 | 12 | 12 | 12 | 12 | 12 |
| Temperatur | [°C] | 110 | 110 | 110 | 110 | 110 | 110 | 110 | 110 |
| Rührleistung | [U/mi n] | 2000 | 600 | 600 | 600 | 600 | 600 | 600 | 600 |
| Prüfergebnisse | | | | | | | | | |
| Säurezahl | [mgKOH/g] | 72 | 102 | 121 | 172 | 115 | 93 | 135 | 32 |
| Verseifungszahl | [mgKOH/g] | | 149 | | | | | 163 | |
| Tropfpunkt | [°C] | 75,8 | | | | | 74 | 84 | |
| Schmelzpunkt | [°C] | 77.1 | 74,6 | | | | | | |
| Schmelzenthalpie | [J/g] | -202,4 | -195 | | | | | | |
| lodfarbzahl | | | | | 1.1 | | 0.9 | | |

### Beispiel 3 - 6: Esterwachse und teilverseifte Esterwachse auf Basis von oxidiertem Reiskleiewachs

### Beispiel 3: Synthetisches Esterwachs (Typ E)

Ansatz:

| | |
|---|---|
| Oxidiertes Reiskleiewachs (Typ 1) | 500 g |
| Ethylenglykol | 34,1 g |
| Methansulfonsäure | 1,1 g |

### Durchführung:

In einem 2 I Reaktionsgefäß mit Rührer, Temperaturfühler, Tropftrichter und Rückflusskühler wird das Reiskleiewachsoxidat unter Stickstoffatmosphäre aufgeschmolzen. Anschließend werden Ethylenglykol und Methansulfonsäure zugegeben. Das Reaktionsgemisch wird bis zum Erreichen von Säurezahl 16 mg KOH/g bei 120 °C gerührt.
Im Anschluss wird zunächst NaOH und nach weiteren 5 Minuten Wasserstoffperoxid zugegeben. Es wird für 10 Minuten Vakuum angelegt, um der Reaktionsmischung Wasser zu entziehen, und anschließend die Reaktionsmischung im heißen Zustand druckfiltriert.

### Beispiel 4: Synthetisches Esterwachs (Typ KSL)

Ansatz:

| | |
|---|---|
| Oxidiertes Reiskleiewachs (Typ 1) | 250 g |
| Ethylenglykol | 15,4 g |
| Methansulfonsäure | 0,55 g |

### Durchführung:

In einem 1 I Reaktionsgefäß mit Rührer, Temperaturfühler, Tropftrichter und Rückflusskühler wird das Reiskleiewachsoxidat unter Stickstoffatmosphäre aufgeschmolzen. Anschließend werden Ethylenglykol und Methansulfonsäure zugegeben. Das Reaktionsgemisch wird bis zum Erreichen von Säurezahl 30 mg KOH/g bei 120 °C gerührt.
Im Anschluss wird zunächst NaOH, dann nach 5 Minuten Wasserstoffperoxid zugegeben. Es wird für 10 Minuten Vakuum angelegt, um der Reaktionsmischung Wasser zu entziehen, und anschließend die Reaktionsmischung im heißen Zustand druckfiltriert.

### Beispiel 5: Teilverseifttes Esterwachs (Typ OP)

Ansatz:

| | |
|---|---|
| Oxidiertes Reiskleiewachs (Typ 1) | 500 g |
| Butandiol-1,3 | 30,6 g |
| Kalk | 9,7 g |
| Methansulfonsäure | 1,1 g |

### Durchführung:

In einem 2 I Reaktionsgefäß mit Rührer, Temperaturfühler, Tropftrichter und Rückflusskühler wird das Reiskleiewachsoxidat unter Stickstoffatmosphäre aufgeschmolzen. Anschließend werden Butandiol und Methansulfonsäure zugegeben. Das Reaktionsgemisch wird bis zum Erreichen von Säurezahl 50 mg KOH/g bei 120 °C gerührt. Im Anschluss wird zunächst NaOH, nach 5 Minuten Wasserstoffperoxid und nach weiteren 10 Minuten Calciumhydroxid zugegeben. Das Reaktionsgemisch wird bis zum Erreichen der Säurezahl 14 gerührt. Es wird für 10 Minuten Vakuum angelegt um der Reaktionsmischung Wasser zu entziehen und anschließend die Reaktionsmischung im heißen Zustand druckfiltriert.

### Beispiel 6: Synthetisches Esterwachs (Methylester)

Ansatz:

| | |
|---|---|
| Oxidiertes Reiskleiewachs (Typ 1) | 500 g |
| Methanol | 2500 ml |
| Methansulfonsäure | 5 g |

### Durchführung:

In einem 5 I Reaktionsgefäß mit Rührer, Temperaturfühler, Tropftrichter und Rückflusskühler wird das Reiskleiewachsoxidat unter Stickstoffatmosphäre aufgeschmolzen. Anschließend werden Methanol und Methansulfonsäure zugegeben. Das Reaktionsgemisch wird bis zum Erreichen von Säurezahl 8 mg KOH/g bei 70 °C gerührt. Anschließend wird das überschüssige Methanol bei 80°C abdestilliert, sowie anschließend für 20 Minuten Vakuum angelegt um das Methanol vollständig zu entfernen.
Im Anschluss wird zunächst NaOH und nach weiteren 5 Minuten Wasserstoffperoxid zugegeben. Es wird für 10 Minuten Vakuum angelegt, um der Reaktionsmischung Wasser zu entziehen, und anschließend die Reaktionsmischung im heißen Zustand druckfiltriert.

**Tabelle 6: Esterwachse und teilverseifte Esterwachse auf Basis von oxidiertem Reiskleiewachs**

| Versuchsnummer | | 9 (erf.g.) Typ E | 10 (erf.g.) Typ KSL | 11 (erf.g.) Typ OP | 12 (erf. g.) Methylester |
|---|---|---|---|---|---|
| Oxidiertes Reiswachs Typ 2 (Versuchsnr. 5) | [g] | 500 | 250 | 500 | 500 |
| Zusätze | | | | | |
| Ethylenglykol | [g] | 34,1 | 15,4 | | |
| Butandiol | [g] | | | 30,6 | |
| Kalk | [g] | | | 9,7 | |
| Methanol | [ml] | | | | 2500 |
| Methansulfonsäure, 70 %ig | [g] | 1,1 | 0,55 | 1,1 | 5 |
| Bedingungen | | | | | |
| Reaktionsdauer | [h] | 3 | 4 | 3 | 7 |
| Temperatur | [°C] | 120 | 120 | 120 | 70 |
| Prüfergebnisse | | | | | |
| Säurezahl | [mg KOH/g] | 18,2 | 31 | 14,2 | 8 |
| Verseifungszahl | [mg KOH/g] | 185 | 114 | 147 | 173 |
| Tropfpunkt | [°C] | 76 | 83 | 108 | 64 |
| Schmelzpunkt | [°C] | 77,8 | 77,7 | | 60,1 |
| Schmelzenthalpie | [J/g] | 195,3 | -198 | | -169,5 |
| TGA | [wt.%,300°/+30min] | 9,8 / 24,8 | 10,5 / 25 | 3,8 / 14,3 | 94,8 / 97,5 |
| lodfarbzahl | | 4.6 | 7.4 | 19.6 | 8,3 |
| Ca-Gehalt | [Gew.-%] | | | 1,23 | |

## Patentansprüche

1. Reiskleiewachsoxidate erhältlich nach einem Verfahren gemäß Anspruch 11, **dadurch gekennzeichnet, dass** diese eine Säurezahl gemessen nach DIN ISO 2114 von mindestens 70 mg KOH/g haben.

2. Reiskleiewachsoxidate gemäß Anspruch 1, **dadurch gekennzeichnet, dass** diese zu mindestens 85 Gew.-% folgende Komponenten enthalten:
a) 40 bis 97 Gew.-% freie aliphatische Carbonsäuren C₈-C₃₆,
b) 0 bis 50 Gew.-% freie aliphatische Fettalkohole C₂₄-C₃₆,
c) 3 bis 15 Gew.-% freie aliphatische Disäuren C₁₀-C₃₀,
d) 0 bis 65 Gew.-% genuinen Estern C₄₄-C₆₂,
e) 0 bis 12 Gew.-% weitere im Reiswachs vorhandene natürliche Bestandteile.

3. Reiskleiewachsoxidate gemäß Anspruch 1, **dadurch gekennzeichnet, dass** diese zu mindestens 85 Gew.-% folgende Komponenten enthalten:
a) 60 bis 97 Gew.-% freie aliphatische Carbonsäuren C₈-C₃₆,
b) bis 20 Gew.-% freie aliphatische Fettalkohole C₂₄-C₃₆,
c) 5 bis 15 Gew.-% freie aliphatische Disäuren C₁₀-C₃₀,
d) 0 bis 50 Gew.-% genuinen Estern C₄₄-C₆₂,
e) 0 bis 12 Gew.-% weitere im Reiswachs vorhandene natürliche Bestandteile.

4. Reiskleiewachsoxidate gemäß Anspruch 1, **dadurch gekennzeichnet, dass** diese zu mindestens 85 Gew.-% folgende Komponenten enthalten:
a) 70 bis 97 Gew.-% freie aliphatische Carbonsäuren C₈-C₃₆,
b) 0 bis 5 Gew.-% freie aliphatische Fettalkohole C₂₄-C₃₆,
c) 5 bis 12 Gew.-% freie aliphatische Disäuren C₁₀-C₃₀,
d) 0 bis 40 Gew.-% genuinen Estern C₄₄-C₆₂,
e) 0 bis 12 Gew.-% weitere im Reiswachs vorhandene natürliche Bestandteile.

5. Reiskleiewachsoxidate gemäß einem oder mehrerer vorhergehender Ansprüche, **dadurch gekennzeichnet, dass** diese weitere nicht weiter spezifizierte Bestandteile (natürliche Bestandteile im Reiswachs) aus dem rohen oder raffinierten Reiskleiewachsrohstoff sowie ggf. daraus entstandenen Oxidate in Konzentrationen von nicht mehr als 15 Gew.-% enthalten.

6. Reiskleiewachsoxidate gemäß einem oder mehrerer vorhergehender Ansprüche, **dadurch gekennzeichnet, dass** diese Lignocerinsäure (C₂₄-Säure) zu mindestens 10 Gew.-%, enthalten.

7. Reiskleiewachsoxidate gemäß einem oder mehrerer vorhergehender Ansprüche, **dadurch gekennzeichnet, dass** die Gewichtsverhältnisse von (Lignocerinsäure C₂₄, Behensäure C₂₂ und Melissinsäure C₃₀) folgende charakteristischen Verhältnisse bilden:
a) Behensäure zu Lignocerinsäure C22:C24, liegt für die erfindungsgemäßen Reiskleiewachsoxidate bei 1.0:2.0 bis 1:2.8.
b) Behensäure zu Melissinsäure C22:C30, liegt bei den erfindungsgemäßen Reiskleiewachsoxidaten zwischen 1.0:0.8 bis 1:1.2, bis 1.0:1.05.

8. Reiskleiewachsoxidate, gemäß einem oder mehrerer vorhergehender Ansprüche, **dadurch gekennzeichnet, dass** der Anteil genuiner Ester (C₄₆-C₆₂) in Mengen kleiner 65 Gew.-% liegt.

9. Reiskleiewachsoxidate, gemäß einem oder mehrerer vorhergehender Ansprüche, **dadurch gekennzeichnet, dass** diese einen Tropfpunkt gemessen nach DIN ISO 2176 zwischen 70°C und 90 °C haben.

10. Reiskleiewachsoxidate, gemäß einem oder mehrerer vorhergehender Ansprüche, **dadurch gekennzeichnet, dass** diese eine lodfarbzahl gemessen nach DIN 6162 bei kleiner 20 aufweisen.

11. Verfahren zur Herstellung von Reiskleiewachsoxidaten, gemäß einem oder mehrerer der Ansprüche 1 bis 10, durch Oxidation mit Chromschwefelsäure von rohen oder raffiniertem Reiskleiewachs unter Erhöhung der Verseifungszahl und gleichzeitigem Einsatz kleiner Mengen von maximal 10 Gew.-% eines oder mehrerer Oxidationspromotoren bezogen auf die Menge des eingesetzten Ausgangswachs.

12. Verfahren, gemäß Anspruch 11, **dadurch gekennzeichnet, dass** die Erhöhung der Verseifungszahl gemessen nach DIN ISO 3681 um minimal 50 % erfolgt.

13. Verfahren, gemäß Anspruch 11, **dadurch gekennzeichnet, dass** dem Ausgangsrohstoff wahlweise weitere mit Chromschwefelsäure oxidierbare Substanzen in untergeordneten Mengen zugesetzt werden.

14. Verfahren, gemäß Anspruch 11, **dadurch gekennzeichnet, dass** das Endprodukt gewaschen und gegebenenfalls weiter aufbereitet wird.

15. Verfahren, gemäß Anspruch 11, **dadurch gekennzeichnet, dass** das Endprodukt von noch vorhandenen Chromseifen befreit wird.

16. Verfahren gemäß einem oder mehrerer vorhergehender Ansprüche 11 bis 15, **dadurch gekennzeichnet, dass** der Ausgangsrohstoff maximal 50 Gew.-% Reiskleieöl, enthält.

17. Verwendung von Reiskleiewachsoxidaten mindestens einer der Ansprüche 1 bis 10, zur Herstellung von synthetischen Esterwachsen durch Veresterung mit einem oder mehreren mono- oder polyvalenten Alkoholen.

18. Verwendung der gemäß Anspruch 17, **dadurch gekennzeichnet, dass** den Reiskleiewachsoxidaten weitere aliphatische oder aromatische Mono- oder Dicarbonsäuren vor der Veresterung zugesetzt werden.

19. Verwendung gemäß den Ansprüchen 17 und/oder 18, **dadurch gekennzeichnet, dass** die Veresterungsprodukte eine lodfarbzahl von kleiner 10 aufweisen.

20. Verwendung gemäß einem oder mehrerer vorhergehender Ansprüche 17 bis 19, zur Herstellung von vollverseiften Reiskleiewachsderivaten durch Verseifung mit basischen Metallhydroxiden, Metallcarbonaten oder mit wässrigen Laugen.

21. Verwendung gemäß einem oder mehrerer vorhergehender Ansprüche 17 bis 20, zur Herstellung von teilverseiften Reiskleiewachsestern durch Teilveresterung mit einem oder mehreren polyvalenten Alkoholen und anschließender Verseifung mit basischen Metallhydroxiden, Metallcarbonaten oder mit wässrigen Laugen .

22. Verwendung gemäß Anspruch 21, **dadurch gekennzeichnet, dass** den Reiskleiewachsoxidaten weitere aliphatische oder aromatische Mono- oder Dicarbonsäuren vor der Veresterung zugesetzt werden.

23. Verwendung gemäß den Ansprüchen 21 und 22, **dadurch gekennzeichnet, dass** die Veresterungsprodukte lodfarbzahl von kleiner 10 aufweisen.

24. Verwendung des Verfahrens, gemäß Anspruch 11, **dadurch gekennzeichnet** mit Chromschwefelsäure schlecht oxidierbare Naturwachse, wie Reiskleiewachs, Sonnenblumenwachs, Zuckerrohrwachs auf Säurezahlen gemessen nach DIN ISO 2114 von mindestens 70 mg KOH/g, zu oxidieren.

## Claims

1. A waxy oxidation product of rice bran obtainable according to a process as claimed in claim 11, wherein it has an acid number measured according to DIN ISO 2114 of at least 70 mg KOH/g.

2. The waxy oxidation product of rice bran as claimed in claim 1, wherein it comprises to at least 85% by weight the following components:
a) 40 to 97% by weight of free aliphatic carboxylic acids C₈-C₃₆,
b) 0 to 50% by weight of free aliphatic fatty alcohols C₂₄-C₃₆,
c) 3 to 15% by weight of free aliphatic diacids C₁₀-C₃₀,
d) 0 to 65% by weight of genuine esters C₄₄-C₆₂,
e) 0 to 12% by weight of further natural constituents present in the rice wax.

3. The waxy oxidation product of rice bran as claimed in claim 1, wherein it comprises to at least 85% by weight the following components:
a) 60 to 97% by weight of free aliphatic carboxylic acids C₈-C₃₆,
b) to 20% by weight of free aliphatic fatty alcohols C₂₄-C₃₆,
c) 5 to 15% by weight of free aliphatic diacids C₁₀-C₃₀,
d) 0 to 50% by weight of genuine esters C₄₄-C₆₂,
e) 0 to 12% by weight of further natural constituents present in the rice wax.

4. The waxy oxidation product of rice bran as claimed in claim 1, wherein it comprises to at least 85% by weight the following components:
a) 70 to 97% by weight of free aliphatic carboxylic acids C₈-C₃₆,
b) 0 to 5% by weight of free aliphatic fatty alcohols C₂₄-C₃₆,
c) 5 to 12% by weight of free aliphatic diacids C₁₀-C₃₀,
d) 0 to 40% by weight of genuine esters C₄₄-C₆₂,
e) 0 to 12% by weight of further natural constituents present in the rice wax.

5. A waxy oxidation product of rice bran as claimed in one or more of the preceding claims, wherein it comprises further constituents that are not further specified (natural constituents in the rice wax) from the crude or refined rice bran wax raw material, and also optionally oxidation products arising therefrom in concentrations of not more than 15% by weight.

6. The waxy oxidation product of rice bran as claimed in one or more of the preceding claims, wherein it comprises lignoceric acid (C₂₄ acid) to at least 10% by weight.

7. The waxy oxidation product of rice bran as claimed in one or more of the preceding claims, wherein the weight ratios of lignoceric acid C₂₄, behenic acid C₂₂ and melissic acid C₃₀ form the following characteristic ratios:
a) for the waxy oxidation products of rice bran according to the invention behenic acid to lignoceric acid C₂₂:C₂₄ is at 1.0:2.0 to 1:2.8
b) in the case of the waxy oxidation products of rice bran according to the invention, behenic acid to melissic acid C₂₂:C₃₀ is between 1.0:0.8 to 1:1.2, to 1.0:1.05.

8. The waxy oxidation product of rice bran according to one or more of the preceding claims, wherein the fraction of genuine esters (C₄₆-C₆₂) is in amounts less than 65% by weight.

9. The waxy oxidation product of rice bran according to one or more of the preceding claims, wherein it has a dropping point measured according to DIN ISO 2176 between 70°C and 90°C.

10. The waxy oxidation product of rice bran as claimed in one or more of the preceding claims, wherein it has an iodine color number measured in accordance with DIN 6162 of less than 20.

11. A process for producing waxy oxidation products of rice bran, as claimed in one or more of claims 1 to 10, by oxidation with chromosulfuric acid of crude or refined rice bran wax, with increase in the saponification number and simultaneous use of small amounts of at most 10% by weight of one or more oxidation promoters, based on the amount of starting wax used.

12. The process as claimed in claim 11, wherein the saponification number measured according to DIN ISO 3681 is increased by a minimum of 50%.

13. The process as claimed in claim 11, wherein, if desired, further substances oxidizable with chromosulfuric acid are added in minor amounts to the starting raw material.

14. The process as claimed in claim 11, wherein the end product is washed and optionally further processed.

15. The process as claimed in claim 11, wherein the end product is freed from any chromium soaps still present.

16. The process as claimed in one or more of the preceding claims 11 to 15, wherein the starting raw material comprises at most 50% by weight of rice bran oil.

17. The use of waxy oxidation products of rice bran of at least one of claims 1 to 10, for producing synthetic ester waxes by esterification with one or more mono-or polyvalent alcohols.

18. The use as claimed in claim 17, wherein further aliphatic or aromatic mono-or dicarboxylic acids are added to the waxy oxidation products of rice bran prior to the esterification.

19. The use as claimed in claims 17 and/or 18, wherein the esterification products have an iodine color number of less than 10.

20. The use as claimed in one or more of the preceding claims 17 to 19 for producing completely saponified rice bran wax derivatives by saponification with basic metal hydroxides, metal carbonates or with aqueous alkaline solutions.

21. The use as claimed in one or more of the preceding claims 17 to 20 for producing partially saponified rice bran wax esters by partial esterification with one or more polyvalent alcohols and subsequent saponification with basic metal hydroxides, metal carbonates or with aqueous alkaline solutions.

22. The use as claimed in claim 21, wherein further aliphatic or aromatic mono-or dicarboxylic acids are added to the waxy oxidation products of rice bran prior to the esterification.

23. The use as claimed in claims 21 and 22, wherein the esterification products have an iodine color number of less than 10.

24. The use of the process as claimed in claim 11, wherein natural waxes poorly oxidizable with chromosulfuric acid, such as rice bran wax, sunflower wax, sugar cane wax are to be oxidized to acid numbers measured according to DIN ISO 2114 of at least 70 mg KOH/g.

## Revendications

1. Produits d'oxydation de cire de son de riz pouvant être obtenus par un procédé selon la revendication 11, **caractérisés en ce que** ceux-ci ont un indice d'acidité mesuré selon DIN ISO 2114 d'au moins 70 mg KOH/g.

2. Produits d'oxydation de cire de son de riz selon la revendication 1, **caractérisés en ce que** ceux-ci contiennent les composants suivants à hauteur d'au moins 85 % en poids :
a) 40 à 97 % en poids d'acides carboxyliques aliphatiques libres en C₈-C₃₆,
b) 0 à 50 % en poids d'alcools gras aliphatiques libres en C₂₄-C₃₆,
c) 3 à 15 % en poids de diacides aliphatiques libres en C₁₀-C₃₀,
d) 0 à 65 % en poids d'esters originaux en C₄₄-C₆₂,
e) 0 à 12 % en poids d'autres constituants naturels présents dans le son de riz.

3. Produits d'oxydation de cire de son de riz selon la revendication 1, **caractérisés en ce que** ceux-ci contiennent les composants suivants à hauteur d'au moins 85 % en poids :
a) 60 à 97 % en poids d'acides carboxyliques aliphatiques libres en C₈-C₃₆,
b) jusqu'à 20 % en poids d'alcools gras aliphatiques libres en C₂₄-C₃₆,
c) 5 à 15 % en poids de diacides aliphatiques libres en C₁₀-C₃₀,
d) 0 à 50 % en poids d'esters originaux en C₄₄-C₆₂,
e) 0 à 12 % en poids d'autres constituants naturels présents dans le son de riz.

4. Produits d'oxydation de cire de son de riz selon la revendication 1, **caractérisés en ce que** ceux-ci contiennent les composants suivants à hauteur d'au moins 85 % en poids :
a) 70 à 97 % en poids d'acides carboxyliques aliphatiques libres en C₈-C₃₆,
b) 0 à 5 % en poids d'alcools gras aliphatiques libres en C₂₄-C₃₆,
c) 5 à 12 % en poids de diacides aliphatiques libres en C₁₀-C₃₀,
d) 0 à 40 % en poids d'esters originaux en C₄₄-C₆₂,
e) 0 à 12 % en poids d'autres constituants naturels présents dans le son de riz.

5. Produits d'oxydation de cire de son de riz selon une ou plusieurs des revendications précédentes, **caractérisés en ce que** ceux-ci contiennent d'autres constituants non spécifiés plus en détail (constituants naturels de la cire de riz) issus de la matière première de cire de son de riz brute ou raffinée, ainsi qu'éventuellement des produits d'oxydation formés à partir de ceux-ci en concentrations inférieures ou égales à 15 % en poids.

6. Produits d'oxydation de cire de son de riz selon une ou plusieurs des revendications précédentes, **caractérisés en ce que** ceux-ci contiennent de l'acide lignocérique (acide en C₂₄) à hauteur d'au moins 10 % en poids.

7. Produits d'oxydation de cire de son de riz selon une ou plusieurs des revendications précédentes, **caractérisés en ce que** les rapports en poids entre l'acide lignocérique en C₂₄, l'acide béhénique en C₂₂ et l'acide mélissique en C₃₀ forment les rapports caractéristiques suivants :
a) acide béhénique sur acide lignocérique C₂₂:C₂₄ de 1,0:2,0 à 1:2,8 pour les produits d'oxydation de cire de son de riz selon l'invention,
b) acide béhénique sur acide mélissique C₂₂:C₃₀ de 1,0:0,8 à 1:1,2, à 1,0:1,05 pour les produits d'oxydation de cire de son de riz selon l'invention.

8. Produits d'oxydation de cire de son de riz selon une ou plusieurs des revendications précédentes, **caractérisés en ce que** la proportion d'esters originaux (C₄₆-C₆₂) se situe à des quantités inférieures à 65 % en poids.

9. Produits d'oxydation de cire de son de riz selon une ou plusieurs des revendications précédentes, **caractérisés en ce que** ceux-ci ont un point d'égouttement mesuré selon DIN ISO 2176 compris entre 70°C et 90°C.

10. Produits d'oxydation de cire de son de riz selon une ou plusieurs des revendications précédentes, **caractérisés en ce que** ceux-ci présentent un indice de coloration d'iode mesuré selon DIN 6162 à moins de 20.

11. Procédé de fabrication de produits d'oxydation de cire de son de riz selon une ou plusieurs des revendications 1 à 10, par oxydation avec de l'acide chromosulfurique de cire de son de riz brute ou raffinée avec élévation de l'indice de saponification et utilisation simultanée de petites quantités d'au plus 10% en poids d'un ou de plusieurs promoteurs d'oxydation par rapport à la quantité de cire de départ utilisée.

12. Procédé selon la revendication 11, **caractérisé en ce que** l'élévation de l'indice de saponification mesuré selon DIN ISO 3681 est d'au moins 50 %.

13. Procédé selon la revendication 11, **caractérisé en ce que** des substances oxydables par l'acide chromosulfurique supplémentaires sont éventuellement ajoutées à la matière première de départ en quantités secondaires.

14. Procédé selon la revendication 11, **caractérisé en ce que** le produit final est lavé et éventuellement davantage traité.

15. Procédé selon la revendication 11, **caractérisé en ce que** le produit final est débarrassé des savons de chrome encore présents.

16. Procédé selon une ou plusieurs des revendications 11 à 15 précédentes, **caractérisé en ce que** la matière première de départ contient au plus 50 % en poids d'huile de son de riz.

17. Utilisation de produits d'oxydation de cire de son de riz selon les revendications 1 à 10 pour la fabrication de cires d'esters synthétiques par estérification avec un ou plusieurs alcools mono- ou polyvalents.

18. Utilisation selon la revendication 17, **caractérisée en ce que** des acides mono- ou dicarboxyliques aliphatiques ou aromatiques supplémentaires sont ajoutés aux produits d'oxydation de cire de son de riz avant l'estérification.

19. Utilisation selon les revendications 17 et/ou 18, **caractérisée en ce que** les produits d'estérification présentent un indice de coloration d'iode de moins de 10.

20. Utilisation selon une ou plusieurs des revendications 17 à 19 précédentes, pour la fabrication de dérivés de cire de son de riz entièrement saponifiés par saponification avec des hydroxydes de métaux basiques, des carbonates de métaux ou avec des lessives aqueuses.

21. Utilisation selon une ou plusieurs des revendications 17 à 20 précédentes, pour la fabrication d'esters de cire de son de riz partiellement saponifiés par estérification partielle avec un ou plusieurs alcools polyvalents, puis saponification avec des hydroxydes de métaux basiques, des carbonates de métaux ou avec des lessives aqueuses.

22. Utilisation selon la revendication 21, **caractérisée en ce que** des acides mono- ou dicarboxyliques aliphatiques ou aromatiques supplémentaires sont ajoutés aux produits d'oxydation de cire de son de riz avant l'estérification.

23. Utilisation selon les revendications 21 et 22, **caractérisée en ce que** les produits d'estérification présentent un indice de coloration d'iode inférieur à 10.

24. Utilisation du procédé selon la revendication 11, **caractérisée en ce que** des cires naturelles difficilement oxydables avec l'acide chromosulfurique, telles que la cire de son de riz, la cire de tournesol, la cire de canne à sucre, sont oxydées à des indices d'acidité mesurés selon DIN ISO 2114 d'au moins 70 mg KOH/g.
